# EUROPEAN PATENT SPECIFICATION

(11) **EP 0 452 463 B1**
(45) Date of publication and mention of the grant of the patent: **24.09.1997**
(21) Application number: 90916765.2
(22) Date of filing: 08.11.1990
(51) Int. Cl.: B32B 3/12, B64C 1/00, F42B 39/14

(54) **COMPOSITE MATERIALS USEFUL IN THE PROTECTION OF AIRCRAFT STRUCTURES**
FÜR DEN SCHUTZ EINER FLUGZEUGSTRUKTUR GEEIGNETER VERBUNDSTOFF
MATERIAUX COMPOSITES UTILISES POUR LA PROTECTION DE STRUCTURES D'AERONEFS

(30) Priority: 08.11.1989 GB 8925192; 08.11.1989 GB 8925194
(43) Date of publication of application: 23.10.1991
(73) Proprietor: Royal Ordnance plc, Euxton Chorley Lancashire PR7 6AD (GB)
(72) Inventor: LEE, Peter, Raymond, Tunbridge Wells Kent TN3 0HA (GB)
(74) Representative: Wildman, David Brian
(86) International application number: GB9001723
(87) International publication number: WO9107275

(56) References cited:
- FR-A- 2 317 504
- US-A- 4 198 454
- US-A- 4 384 020

## Description

The present invention relates to composite materials useful in the protection of aircraft structures from the effects of explosions.

There have been a sufficient number of aircraft bombings, suspected bombings and foiled bombings recently for there to he dawning in the consciousness of those who travel frequently by air the worry that their lives may soon be more at risk from deliberate damage to, as opposed to accidental failure of, the complex structures in which they travel.

The precise sequence of events following the detonation of a bomb on beard an aircraft depends upon the location of the bomb and the size and design of the aircraft. However, certain features are common to most events which have been investigated.

It has been observed that aircraft can survive the detonation of bombs on board, provided certain features are present. A bomb placed near the outer skin of the aircraft will, most probably, blow a hole in the skin and cause explosive decompression. However, it has often been the case that the aircraft can still land normally. The same seems to be the case even for bombs which have exploded in the luggage compartments of the older types of aircraft. Luggage in these aircraft is contained in cargo nets, rather than the standard international luggage containers that the more modern wide-bodied aircraft use. Indeed, the accepted minimum risk position for a bomb discovered on beard any type of aircraft is to place it by a door, with the interior side of the bomb tamped with cushions. The reason for choosing this position is because of the high survivability rate observed in cases of bombs planted against the aircraft hull in regions to which passengers or cleaning staff have access, which rarely destroy vital electronics or hydraulic systems and do not always damage significant load-bearing members so as to weaken the overall structure and because of recent cases of aircraft surviving massive losses of skin around regularly shaped fatigue failures in the hull.

However, in cases where the bomb is placed in a position not adjacent to the outer skin, severe, often fatal, damage can be caused.

Passenger cabin floors are relatively light structures laid on load-bearing beams. These floor beams may be tension load carriers as in the case of Boeing 747s, because of the non-circular nature of the aircraft cross-section. It is thus very possible for a bomb to damage the floor beams and, as a result, load the aircraft skin remotely from the site of the explosion asymmetrically both before and after the hull is breached by the bomb. Blast may also travel significant distances by different routes within the hollow and open channels in the aircraft structure to meet at points well removed from the site of the bomb to cause skin and stringer rupture at several locations on the aircraft skin. Blast may also emerge into the relatively large free space of the passenger cabin and, because of the presence of rigid and substantial structures such as galleys or toilets, reflect on to the inside of the aircraft skin remote from the site of the bomb and cause unexpected damage there.
Blast emerging from the aircraft skin at, and remote from the site of the bomb, tends to tear irregularly shaped holes (as opposed to the cases of the more regular skin failure due to fatigue or, say, loss of a hold door). Regularly shaped holes are less often associated with catastrophic failure of the aircraft than irregularly shaped ones. Irregular holes tend to suffer enlarging and further skin damage due to the outrush of cabin air and slipstream effects.

It is possible that some modern wide-bodied aircraft may be more vulnerable to bombs of a size similar to those that have not always caused crashes of smaller aircraft. One theory is that, since the wide-bodied aircraft employ a skin sheeting alloy which is only slightly thicker than that used in very much smaller aircraft, the latter are much stiffer structures than the former ones. Consequently, the smaller ones can withstand greater relative damage to their skin and stringers than the larger ones.

The purpose of the present invention is to reduce the risk of failure of an aircraft structure caused by the detonation of a bomb or other explosive device thereon by providing a novel material designed to resist, attenuate and contain the effects of an explosion within the cargo hold of the aircraft.

FR-A-2 317 504 describes a cellular structure for absorbing sound. However, the material described is unsuitable for absorbing energy from blast waves resulting from an explosion.

According to the present invention there is provided an explosion blast and fragment absorbing composite material, the material having a composite laminate structure comprising one or more layers of lightweight foamed or cellular material, said one or more layers of foamed or cellular material being sandwiched between layers of tough lightweight impact resistant material having a multiplicity of holes formed therethrough, the composite laminate material being characterised in that said foamed or cellular material is formed of organic or inorganic material having a reticulated structure, i.e. its individual cells or bubbles are open to allow gas passage through said foamed or cellular material, and is compressible by an explosion blast wave passing through said multiplicity of holes to thereby attenuate said blast wave.

The material according to the present invention preferably comprises a unitary structure (rather than independently spaced layers).

The bubbles or cells of the foamed or cellular material together with the holes of the impact resistant material form a multiplicity of air paths through which air and blast pressure can be vented. If the material according to the present invention is subjected on one side to the hot, rapidly moving compressed gases in a blast wave the size and number of the air paths will attenuate the blast wave so that the pressure versus time characteristic of the blast is converted from a narrow pulse of very high intensity to a wider pulse of lower intensity.

The foamed or cellular material is preferably a material which is substantially rigid under moderate pressure but is crushable under high pressure (eg. associated with a blast wave). It may alternatively be a material whose shape has an elastic memory so that when the material is compressed it has energy to perform work against the blast to restore its shape.

The use of plastics which decompose to give toxic products is preferably avoided so that any fireball associated with the blast does not release such products from the composite material into the atmosphere of the aircraft.

Preferably, the density of the foamed or cellular material is in the range 0.05 to 0.35 x 10³ kg per m^{3.}. The average foam bubble or cell size is preferably in the range 0.01mm to 2mm and is produced by a process in which the bubble or cell size is capable of being controlled and reproduced.

The foamed or cellular material is an open cell foam, eg. made of an organic or inorganic material such as polyethersulphone, foamed silica, foamed mica and the like.

The foamed or cellular material may itself be contained in the cells of a rigid cellular, eg. honeycomb material.

The lightweight impact resistant material of the said layers is desirably a rigid material imparting structural strength to the composite material. The material may be a layer of solid lightweight material, eg. a lightweight metal and/or fibre reinforced composite layer, having holes formed therethrough. Alternatively, the material may be a layer of a lightweight metal and/or composite layer which is manufactured as a multi-tubular or multicellular structure. For example, such material may comprise a reticulated or honeycomb structure. It may be made of a lightweight metal (eg. aluminium or aluminium alloy eg.25µm to 100 µm thick and/or fibre reinforced composite material. Honeycomb of fibre reinforced composite material may be made for example by the method described in UK Patent Application No.GB 2058661B. Preferably the cells, eg. honeycomb, cells in such a structure have an average diameter between opposite sides of from 5mm to 20mm.

Where the impact resistant material comprises a multitubular, reticulated or honeycomb structure the cellular walls of the structure preferably have holes formed therethrough so that air and other gases in a blast can diffuse laterally throughout the structure.

Preferably, the positions of transverse holes through adjacent layers of the impact resistant material are staggered relative to one another especially in the case where the holes are formed from a solid sheet or layer of impact resistant material whereby the path length for gas to travel through the transverse holes of the layered structure is enhanced, preferably maximised. For example, a multilayer structure may be formed from impact resistant material having two different hole patterns therethrough, the patterns of the two types appearing alternately in adjacent layers.

The impact resistant material may for example comprise an impervious, fire resistant fibre-reinforced composite, for example a thermosetting or thermoplastic polymeric matrix material reinforced with fibres selected from glass, carbon, polyamide, polyeolefin, polyaramid and the like or blends thereof.

Preferably, the density of the impact resistant material is less than 2 x 10³ kg per m³, desirably less than 1 x 10³ kg per m³.

The fibres employed to provide a fibre-reinforced composite may be woven, or unwoven, short or elongated fibres. They may be deposited randomly in the matrix or in a uniform pattern. However, the mechanical properties of the resultant sheet employed to provide each layer preferably (although not essentially) are substantially uniform in each direction along its surface.

Glass fibre reinforced epoxy resin provides a suitable thermosetting composite material for the layers of impact resistant material where these are provided from solid layers. Layers of this material having a thickness of from 0.5mm to 5mm, eg. from 1 to 2mm are especially suitable. Another preferred material comprises a suitable known thermoplastic elastomer laminate eg. formed from polyethersulphone containing layer(s) embedding polyaramid fibres.

The said holes where formed through layers of impact resistant material may be from 0.2 to 5mm, eg. 0.5mm to 2mm diameter. Such holes are preferably cylindrical and of circular cross-section but they could also have other shapes and have a cross-section which varies through the layer. The holes may be formed by any convenient process, eg. by punching or pressing layers containing no holes or by moulding a composite around pins or other projections which may be removed from the composite when moulded. Preferably between 30% and 70%, eg. about 50% of the surface area of the layer of impact resistant material is formed of solid material (the holes forming the remainder of the surface area).

The holes or cells of the impact resistant layer may themselves be filled partially or wholly with a lightweight formed or cellular polymeric material.

The interface between adjacent layers of foamed or cellularpolymeric material and of impact resistant material or between adjacent layers of impact resistant material may be lined with a frangible sheet eg. of metallic material, for example aluminium or aluminium alloy foil, eg. 20 to 100 micrometres thick. Such foil may be included only at selected Interfaces, eg. only adjacent to the first two or three foamed or cellular layers adjacent to that surface of the multilayer structure which will be subjected initially to blast pressure. The likelihood of blast pressure shearing the metallic layers at interfaces between layers more distant from the initially subjected surface is thereafter considerably reduced.

Preferably the surface of the composite material which will be subjected to blast does not include aluminium, any aluminium being separated therefrom by other, preferably fire-resistant material.

The material according to the present invention may include one or more optional layers of a fire-resistant unreinforced plastics sheet, eg. from 0.5mm to 1.5mm thick, with holes formed therethrough so that between 30 per cent and 70 per cent of the surface area of the sheet is occupied by the openings of the holes. The hole sizes may vary throughout the sheet eg. in a range of hole diameters from between 5mm and 0.1mm, eg. between 1 and 5mm at the upper end to between 0.1 and 0.5mm at the lower end, the number of holes for each size increasing as the size decreases. Such sheets may for example be made of a tough thermoplastic material such as polycarbonate, polyethersuphone, polyester or PEEK. Such sheets may be provided between the layers of impact resistant material and the cellular or foamed material.

The surface of composite material according to the present invention which is to be subjected to blast (in the event of an incident) may be formed of one of the said perforated plastics sheets.

Where the composite material includes perforated flexible plastics sheets such sheets may be bonded to adjacent layers of foamed or cellular material and impact resistant material at a relatively small number of bonding sites so that resistance to airflow through the structure is minimised. For example the total surface area of the bonding sites may be less than one tenth of the surface area of the plastics sheet (including holes formed therethrough).

The individual layers incorporated in the composite material according to the present invention may be bonded together by various of the techniques or processes well known in the composites art which may be performed without substantial compression of the foamed or cellular layers. For example, layers may be bonded by bonding agents such as thermosetting, eg. epoxy, or cold setting, eg. polyester resins or by light thermal bonding.

Structures formed from composite material according to the present invention may be further strengthened by overwinding the multilayers in a known manner with strengthening fibres eg. of carbon and/or polyaramid embedded in a suitable bonding resin.

The composite material according to the present invention provides a suitable novel structural and/or reinforcement material for the walls of a luggage or cargo container suitable for storing (together with a plurality of other similar containers) on an aircraft, eg. a commercial airliner. A particularly preferred form of such a luggage container is the subject of a copending International Patent Application of even date (based upon UK Patent Application No.8925193) by the present applicants. Suitable shapes to form a luggage container or part of the structure thereof may be formed by known lay-up techniques eg. using preformed structures. Joints between structures are preferably staggered in position to enhance or maximise the shear surface between layers.

The composite material according to the present invention may also be used to protect the inner surfaces, particularly the ceiling and floor, of a cargo hold ( in which luggage containers are stored) in an aircraft.

The principle of use of the material according to the invention is that any explosion in the cargo hold is preferably contained by the material in the region of the hold desirably in the luggage container from which the blast emanates. Any blast allowed to leave the luggage container is directed in one of the ways described in the aforementioned International Application.

Although impact resistant composite materials are known in the prior art such materials have been designed for purposes different from that for which the present invention has been produced and consequently are not suitable for the applications described herein.

For example UK Patent No.1,534,721 describes a lightweight composite material providing resistance to bullets and shrapnel. However, such material is essentially for use a flexible lightweight armour and does not contemplate use of holes therethrough to vent high pressure gases.

US Patent No. 4,404,889 describes a composite material for use in a tank armour which is resistant to the formation of metallic fragments. Such a composite is not designed to be lightweight and again does not have holes for venting high pressure gases.

On the other hand US Patent Nos. 4,347,796, 4,325,309 and 4,389,947 describe multilayer structures having holes formed through the layers to permit venting of high pressure gases in a blast. However, such structures are for applications of much greater scale, eg. buildings, where the risk of an explosion is very great because of the deliberate storage for example of energetic and explosive material used in ammunition in the building and the mass of the protection is not thought to be important. Consequently, the materials employed which are heavy steels and the like and the way in which the materials are employed together, eg. with substantial air gaps between layers, make the arrangements of such materials quite unsuitable for the applications with which the present invention is concerned. The art with which such materials are concerned, ie. building design is also much different from that of the design of flexible lightweight body armour.

Thus, the present invention unexpectedly and beneficially solves the problem, hitherto unconsidered, of providing materials whose application is specifically to protect an aircraft from a bomb or other exploding device contained in a luggage or cargo container on board the aircraft.

By way of illustration, the composite material according to the present invention and comprising alternate layers of impact resistant and foamed or cellular materials functions in the following manner to resist/absorb the blast from an explosion, eg. from a bomb. Approximately half of the impacting area of the blast wave strikes the surface of the nearest layer of impact resistant material and is reflected there (given a layer in which 50 per cent of the surface area of solid material remains after formation of the holes therein).

The remainder of the blast wave passes through the holes in that layer to compress the foamed or cellular material present after the impact resistant material the intensity of the wave being attenuated by the work done to compress the foamed or cellular material. Any optional metallic material between the layers will be sheared and forced into the foamed and cellular material, thereby assisting the arrest of the blast wave front. The blast wave then either reflects from the next surface of impact resistant material and is forced to pass back through the foamed or cellular material it has already traversed or it finds other offset holes in the next impact resistant layer and a similar process restarts. Small high velocity fragments will also be absorbed by the various layers of material, especially the impact resistant layers. Any fireball incident upon the structure is arrested by one or more fire resistant layers in the structure , eg. fire resistant plastics material, provided as the first layer in the structure and/or fire resistant plastics material in the impact resistant material.

Embodiments of the present invention will now be described by way of example with reference to the accompanying drawings in which:
Figure 1 is a cross-sectional end elevation of a laminar composite material embodying the present invention.
Figure 2 is a perspective view of part of an alternative laminate composite material embodying the present invention.
Figure 3 is a cross-sectional end elevation of a further alternative laminate material embodying the present invention.

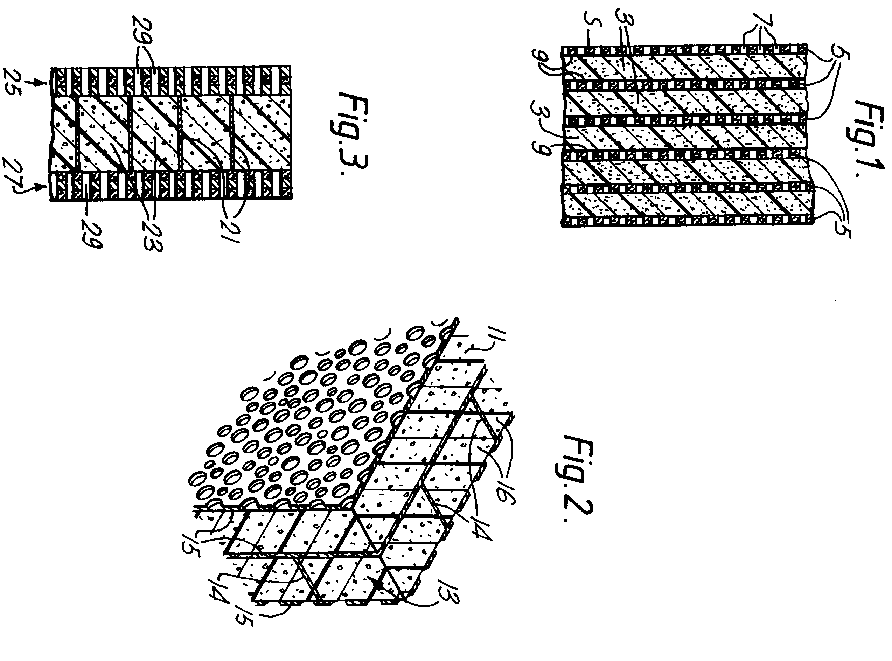

The composite material shown in Figure 1 comprises layers 3 of a rigid, reticulated plastics foam typically 3mm thick, alternating with layers 5 typically 1mm thick of a glass-fibre reinforced plastics material, eg. epoxy resin, each having a multiplicity of holes 7 of average diameter 1mm therethrough. The holes 7 in adjacent layers 5 are offset relative to one another so that the shortest path length between any one pair of holes 7 in adjacent layers 5 is maximised.

The outer layers of the laminate are formed by layers 5 and these outer layers may be slightly thicker, than the layers 5 inside the laminate, eg. 1.5mm thick.

Layers of aluminium foil are deposited at the first six interfaces between layers 5 and 7 nearest the outer surface labelled S which in use will be the surface upon which any blast to be absorbed by the material will first be incident.

The various layers of the composite material shown in Figure 1 are bonded together eg. by an epoxy resin adhesive (not shown) or in one of the other known ways mentioned above.

The composite material shown in Figure 2 comprises layers 11 of non-flammable foamed plastics material alternating between aluminium or aluminium alloy honeycomb layers 13. The layers 13 contain non-flammable foamed plastics material 16 in the cells 14 of the honeycombs. The foamed plastics material in the layers 11 and 13 may be the same material typically 5mm to 15mm thick having a density of from 0.05 to 0.35 x 10³ kg per m³. The foam bubble size is between 0.01mm and 2mm.

The aluminium or aluminium alloy from which the honeycomb is formed may for example have a thickness of from 38 to 76 micrometres. It is perforated with holes of diameter between 0.5 and 1.5mm to no more than 50 per cent of its surface area.

Layers 15 of (unreinforced) fire-resistant plastics sheet are provided at the inner surface of the laminate (that which will be exposed to any blast) and interfaces between the layers 11 and 13. The layers 15 are perforated with holes formed randomly of different diameter so that the area of plastics material remaining is not less than 50 per cent of the surface area of the sheet. The holes vary in size from about 0.5mm to 5mm. The number of holes of each size is roughly in inverse proportion to the size of the holes.

The various layers 11, 13 and 15 of the laminate shown in Figure 2 are bonded together by one of the methods described above.

In an alternative embodiment (not shown), one or more of the honeycomb layers in the laminate shown in Figure 2 is substituted by a perforated non-honeycomb layer, eg. layers similar to the layers 5 in Figure 1.

The laminated material which is shown in Figure 3 comprises aluminium/aluminium alloy honeycomb layers 21 eg. made of Type 3003 Al alloy foils 38 to 76 micrometres thick to BS 1470, filled with a rigid or compressible non-inflammable plastics foam 23, the filled layers 21 themselves being contained between sandwiches 25, 27 each comprising alternate layers of aluminium or aluminium alloy and a high strength, high modulus fibre reinforced composite, eg. polyaramid and/or carbon fibre reinforced polymeric material eg. polyethersulphone the sandwiches 25, 27 having holes 29 formed therethrough. As shown in Figure 3, one of the sandwiches 25 is formed of fibre reinforced composite/aluminium/fibre reinforced composite layers and the other sandwich 27 is formed of aluminium/fibre reinforced composite/aluminium layers although these two sandwiches may be optionally interchanged or one substituted for the other.

Preferably the plastics foam in the material shown in Figure 3 has a cellular structure having cells of from 0.1mm to 2mm average size, the average thickness of the foam layers being 10mm to 55mm. The honeycomb cells have a diameter (side to side measurement) of from 5mm to 20mm, eg. typically 10mm.

## Claims

1. An explosion blast and fragment absorbing composite material, the material having a composite laminate structure comprising one or more layers of lightweight foamed or cellular material (3), said one or more layers of foamed or cellular material being sandwiched between layers of tough lightweight impact resistant material (5) having a multiplicity of holes (7) formed therethrough, the composite laminate material being characterised in that said foamed or cellular material is formed of organic or inorganic material having a reticulated structure, i.e. its individual cells or bubbles are open to allow gas passage through said foamed or cellular material (3), and is compressible by an explosion blast wave passing through said multiplicity of holes to thereby attenuate said blast wave.

2. A composite material as claimed in Claim 1 and wherein the lightweight impact resistant material comprises one or more layers of fibre reinforced composite material having holes formed therethrough.

3. A composite material according to Claim 2 and which includes a plurality of perforated fibre reinforced composite layers and wherein the positions of holes (7) through adjacent layers of the impact resistant material are staggered relative to one another whereby the path length for gas to travel through the holes of the layered structure is enhanced.

4. A composite material according to Claim 3 and wherein the material comprises a multilayer structure formed from impact resistant material having two different hole patterns therethrough, the patterns of the two types appearing alternately in adjacent layers.

5. A composite material according to any one preceding claim and wherein the impact resistant material comprises an impervious, fire resistant fibre-reinforced composite comprising a thermosetting or thermoplastic polymeric matrix material reinforced with fibres selected from glass, carbon, polyamide. polyeolefin, polyaramid or blends thereof.

6. A composite material according to any one of Claims 1 to 5 and wherein holes in the impact resist material are from 0.2 to 5mm in diameter.

7. A composite material according to any one or Claims 1 to 6 and wherein between 30 per cent and 70 per cent of the surface area of each layer of impact resistant material is formed of solid material, the holes forming the remainder of the surface area.

8. A composite material according to any of Claims 1 to 7 and wherein the interface between adjacent layers of foamed or cellular polymeric material and of impact resistant material or between adjacent layers of impact resistant material are lined with a frangible sheet (9).

9. A composite material according to Claim 8 and wherein the said frangible sheets are of aluminium or aluminium alloy foil, 20 to 100 micrometres thick.

10. A composite material according to Claim 1 and wherein the impact resistant material comprises layers of a multitubular, reticulated or honeycomb structure (13; 21).

11. A composite material as claimed in Claim 10 and wherein the cellular walls of the multitubular, reticulated or honeycomb structure are perforated to an extent of not more than 50 per cent of the surface area of such walls.

12. A composite material according to any one of the preceding claims and wherein the material includes layers of perforated fire-resistant plastics material (15).

13. A material according to Claim 12 and wherein the holes formed through the layers of plastics material have various sizes in the range between 0.1 mm to 5mm the number of different sized holes present increasing as the size decreases.

14. A material according to any one of the preceding claims and wherein the foamed or cellular material has a density in the inclusive range 0.05 to 0.35 x 10³ kg per m³ and an average foam or bubble size in the inclusive range 0.01mm to 2mm.

15. A material according to any one of the preceding claims and wherein the holes or cells of the impact resistant material are partially or wholly filled with lightweight foamed or cellular material.

16. A composite material according to any one of preceding claims 10 or 11 whereon the cells (14;21) of said multitubular, reticulated or honeycomb structure are themselves filled with foamed or cellular organic or inorganic material (16;23).

17. The use of a material according to any one of the preceding claims to form or reinforce the walls of an aircraft luggage container.

18. The use of a material according to any one of Claims 1 to 16 to form or reinforce the ceiling and floor of an aircraft luggage or cargo hold.

## Patentansprüche

1. Verbundmaterial, das Explosions-Druckwellen und - Bruchstücke absorbiert, wobei das Material eine Verbundlaminatstruktur aufweist, die eine oder mehrere Schichten leichten geschäumten bzw. zelligen Materials (3) umfaßt, wobei die eine oder mehrere Schichten geschäumten bzw. zelligen Materials als Sandwich zwischen Schichten eines zähen leichten schlagfesten Materials (5) gelegt sind, die eine Vielzahl von durch sie hindurch gebildeten Löchern (7) aufweisen, wobei das Verbundlaminatmaterial dadurch gekennzeichnet ist, daß das geschäumte bzw. zellige Material aus organischem oder anorganischem Material mit einer retikularen Struktur gebildet ist, das heißt seine individuellen Zellen bzw. Blasen offen sind, um einen Gasdurchgang durch das geschäumte bzw. zellige Material (3) zu ermöglichen, und von einer Explosions-Druckwelle, die durch die genannte Vielzahl von Löchern geht, zusammendrückbar ist, um dadurch die Druckwelle abzuschwächen.

2. Verbundmaterial nach Anspruch 1, bei dem das leichte schlagfeste Material eine oder mehrere Schichten eines faserverstärkten Verbundmaterials umfaßt, die durch sie hindurch gebildete Löcher aufweisen.

3. Verbundmaterial nach Anspruch 2, das eine Mehrzahl perforierter faserverstärkter Verbundschichten umfaßt und bei dem die Positionen der Löcher (7) durch aneinandergrenzende Schichten des schlagfesten Materials relativ zueinander versetzt sind, wodurch die Weglänge, die von einem Gas zurückgelegt wird, das durch die Löcher der geschichteten Struktur wandert, verbessert wird.

4. Verbundmaterial nach Anspruch 3, bei dem das Material eine vielschichtige Struktur umfaßt, die aus einem schlagfesten Material mit zwei verschiedenen Lochmustern durch dieses hindurch gebildet ist, wobei die Muster beider Typen alternierend in aneinandergrenzenden Schichten erscheinen.

5. Verbundmaterial nach einem der vorhergehenden Ansprüche, bei dem das schlagfeste Material ein undurchlässiges, feuerbeständiges, faserverstärktes Verbundmaterial umfaßt, das ein wärmehärtbares bzw. thermoplastisches polymeres Matrixmaterial umfaßt, welches mit Fasern verstärkt ist, die aus Glas, Kohlenstoff, Polyamid, Polyolefin, Polyaramid oder Mischungen daraus ausgewählt sind.

6. Verbundmaterial nach einem der Ansprüche 1 bis 5, bei dem Löcher im schlagfesten Material einen Durchmesser von 0,2 bis 5mm aufweisen.

7. Verbundmaterial nach einem der Ansprüche 1 bis 6, bei dem zwischen 30 Prozent und 70 Prozent der Oberfläche jeder Schicht des schlagfesten Materials aus festem Material gebildet ist, wobei die Löcher den Rest der Oberfläche bilden.

8. Verbundmaterial nach einem der Ansprüche 1 bis 7, bei dem die Grenzfläche zwischen aneinandergrenzenden Schichten aus geschäumtem bzw. zelligem polymerem Material und dem schlagfesten Material bzw. zwischen aneinandergrenzenden Schichten des schlagfesten Materials mit einer zerbrechlichen Lage (9) ausgelegt ist.

9. Verbundmaterial nach Anspruch 8, bei dem die zerbrechlichen Lagen aus Aluminiumfolie bzw. aus Aluminiumlegierungsfolie bestehen, die 20 bis 100 Mikrometer dick ist.

10. Verbundmaterial nach Anspruch 1, bei dem das schlagfeste Material Schichten einer vielröhrigen, retikularen bzw. wabenartigen Struktur (13; 21) umfaßt.

11. Verbundmaterial nach Anspruch 10, bei dem die zelligen Wände der vielröhrigen, retikularen bzw. wabenartigen Struktur zu einem Ausmaß von nicht mehr als 50 Prozent der Oberfläche solcher Wände perforiert sind.

12. Verbundmaterial nach einem der vorhergehenden Ansprüche, bei dem das Material Schichten eines perforierten feuerbeständigen Kunststoffmaterials (15) umfaßt.

13. Material nach Anspruch 12, bei dem die Löcher, die durch die Schichten des Kunststoffmaterials gebildet sind, verschiedene Größen im Bereich zwischen 0,1mm und 5mm aufweisen, wobei die Anzahl verschieden großer vorhandener Löcher mit abnehmender Größe steigt.

14. Material nach einem der vorhergehenden Ansprüche, bei dem das geschäumte bzw. zellige Material eine Dichte im Bereich von einschließlich 0,05 bis 0,35 x 10³ kg/m³ und eine durchschnittliche Schaum- bzw. Blasengröße im Bereich von einschließlich 0,01mm bis 2mm aufweist.

15. Material nach einem der vorhergehenden Ansprüche, bei dem die Löcher bzw. die Zellen des schlagfesten Materials teilweise oder ganz mit leichtem geschäumtem bzw. zelligem Material gefüllt sind.

16. Verbundmaterial nach einem der vorhergehenden Ansprüche 10 bzw. 11, bei dem die Zellen (14; 21) der genannten vielröhrigen, retikularen bzw. wabenartigen Struktur ihrerseits mit geschäumtem bzw. zelligem organischem oder anorganischem Material (16; 23) gefüllt sind.

17. Verwendung eines Materials nach einem der vorhergehenden Ansprüche zur Bildung bzw. Verstärkung der Wände eines Luftfahrzeug-Gepäckcontainers.

18. Verwendung eines Materials nach einem der Ansprüche 1 bis 16 zur Bildung bzw. Verstärkung der Decke und des Bodens eines Luftfahrzeug-Gepäckraums bzw. eines Luftfahrzeug-Frachtraums.

## Revendications

1. Matière composite absorbant le souffle et les éclats en cas d'explosion, la structure stratifiée composite de la matière comprenant une ou plusieurs couches d'une matière légère alvéolaire ou en mousse (3), la ou lesdites couches de matière alvéolaire ou en mousse étant intercalées entre des couches d'une matière dure légère (5) résistant aux chocs, dans laquelle sont pratiqués une multitude de trous traversants (7), la matière stratifiée composite étant caractérisée en ce que ladite matière alvéolaire ou en mousse est constituée par une matière organique ou inorganique possédant une structure réticulée, c'est-à-dire que ses alvéoles ou ses bulles individuelles sont ouvertes pour permettre le passage de gaz à travers ladite matière alvéolaire ou en mousse (3) et peut être comprimée par un souffle d'explosion traversant ladite multitude de trous pour ainsi atténuer ledit souffle.

2. Matière composite selon la revendication 1 et dans laquelle la matière légère résistant aux chocs comprend une ou plusieurs couches d'une matière composite renforcée par des fibres, dans laquelle sont pratiqués des trous traversants.

3. Matière composite selon la revendication 2 et qui englobe plusieurs couches composites perforées renforcées par des fibres, et dans laquelle les positions des trous (7) pratiqués à travers des couches adjacentes de la matière résistant aux chocs sont décalées les unes par rapport aux autres, ce qui permet d'augmenter la longueur de la voie de passage pour les gaz à travers les trous de la structure en couches.

4. Matière composite selon la revendication 3 et dans laquelle la matière comprend une structure multicouche constituée d'une matière résistant aux chocs possédant deux modèles différents de trous traversants, les modèles des deux types apparaissant alternativement dans des couches adjacentes.

5. Matière composite selon l'une quelconque des revendications précédentes et dans laquelle la matière résistant aux chocs comprend un composite imperméable ignifuge renforcé par des fibres, comprenant une matière de matrice polymère thermodurcissable ou thermoplastique renforcée avec des fibres choisies parmi le verre, le carbone, le polyamide, les polyoléfines, le polyaramide ou leurs mélanges.

6. Matière composite selon l'une quelconque des revendications 1 à 5 et dans laquelle les trous pratiqués dans la matière résistant aux chocs possèdent un diamètre de 0,2 à 5 mm.

7. Matière composite selon l'une quelconque des revendications 1 à 6 et dans laquelle entre 30 pour cent et 70 pour cent de l'aire de surface de chaque couche de la matière résistant aux chocs sont constitués par une matière solide, les trous formant le reste de l'aire de surface.

8. Matière composite selon l'une quelconque des revendications 1 à 7 et dans laquelle l'interface entre les couches adjacentes de la matière polymère alvéolaire ou en mousse et de la matière résistant aux chocs ou entre des couches adjacentes de la matière résistant aux chocs est recouverte d'une feuille (9) qui peut être rompue.

9. Matière composite selon la revendication 8 et dans laquelle lesdites feuilles aptes à être rompues sont constituées par une feuille mince d'aluminium ou d'alliage d'aluminium ayant une épaisseur de 20 à 100 microns.

10. Matière composite selon la revendication 1 et dans laquelle la matière résistant aux chocs comprend des couches d'une structure multitubulaire, réticulée ou en nid d'abeilles (13; 21).

11. Matière composite selon la revendication 10 et dans laquelle les parois alvéolaires de la structure multitubulaire, réticulée ou en nid d'abeilles sont perforées à concurrence de 50 pour cent au maximum de l'aire de surface desdites parois.

12. Matière composite selon l'une quelconque des revendications précédentes et dans laquelle la matière englobe des couches d'une matière plastique ignifuge perforée (15).

13. Matière composite selon la revendication 12 et dans laquelle les trous traversant les couches de la matière plastique possèdent diverses dimensions dans le domaine entre 0,1 mm et 5 mm, le nombre des trous présents de dimensions différentes augmentant au fur et à mesure que leur dimension diminue.

14. Matière composite selon l'une quelconque des revendications précédentes et dans laquelle la matière alvéolaire ou en mousse possède une masse volumique dans le domaine inclusif de 0,05 à 0,35 x 10³ kg par m³ et une dimension moyenne des bulles ou de la mousse dans le domaine inclusif de 0,01 mm à 2 mm.

15. Matière composite selon l'une quelconque des revendications précédentes et dans laquelle les trous ou les alvéoles de la matière résistant aux chocs sont remplis, en tout ou en partie, avec une matière légère alvéolaire ou en mousse.

16. Matière composite selon l'une quelconque des revendications précédentes 10 ou 11, dans laquelle les alvéoles (14; 21) de ladite structure multitubulaire réticulée ou en nid d'abeilles sont elles-mêmes remplies avec une matière cellulaire ou en mousse organique ou inorganique (16; 23).

17. Utilisation d'une matière selon l'une quelconque des revendications précédentes, pour former ou renforcer les parois d'une soute à bagages d'un avion.

18. Utilisation d'une matière selon l'une quelconque des revendications 1 à 16, pour former ou renforcer le plafond et le plancher d'une soute à bagages ou d'un compartiment à marchandises d'un avion.
